# EUROPEAN PATENT APPLICATION

(11) **EP 4 439 372 A1**
(43) Date of publication of application: **02.10.2024**
(21) Application number: 22920542.2
(22) Date of filing: 13.12.2022
(51) Int. Cl.: G06F 30/23, B21D 22/00, G06F 30/10, G06F 113/22

(54) **METHOD, DEVICE, AND PROGRAM FOR EVALUATING PERIPHERAL SHAPE OF PRESS FORMED ITEM, AND METHOD FOR MANUFACTURING PRESS FORMED ITEM**

(30) Priority: 11.01.2022 JP 2022002024; 28.10.2022 JP 2022172881
(71) Applicant: JFE Steel Corporation, Tokyo 100-0011 (JP)
(72) Inventor: URABE, Masaki, Tokyo 100-0011 (JP); ISHIWATARI, Akinobu, Tokyo 100-0011 (JP)
(74) Representative: Hoffmann Eitle
(86) International application number: PCT/JP2022/045840
(87) International publication number: WO 2023/136024

(57) **Abstract**

A method of evaluating a peripheral shape of a press formed part according to the present invention includes: acquiring, as a peripheral shape of an actual press formed part 11, a peripheral shape of a press formed part workpiece bottom dead center shape model 17 acquired by mechanical analysis in a process of sandwiching the actual press formed part 11 that is actually press-formed and is spring-backed up to a forming bottom dead center (S3), obtaining a press formed part analysis model 21 by elastoplastic mechanical analysis in a process of press forming the actual press formed part 11 (S5), acquiring a peripheral shape at the forming bottom dead center of the press formed part analysis model 21 (S7), and comparing the peripheral shapes of the actual press formed part 11 and the press formed part analysis model 21 and evaluating each of the peripheral shapes (S9).

## Description

### Field

The present invention relates to a method, a device, and a program of evaluating a peripheral shape of a press formed part by comparing a peripheral shape of an actual press formed part that is actually press-formed with a peripheral shape of a press formed part analysis model obtained by press forming analysis. Furthermore, the present invention relates to a method of manufacturing a press formed part, in which the method is performed to manufacture an actual press formed part having improved dimensional accuracy by adjusting a press forming condition so as to improve dimensional accuracy of a peripheral shape of the press formed part and actually performing press forming.

### Background

In press forming of a metal plate, it is required not to cause forming defectiveness such as fracture, wrinkles, and forming defects of dimensional accuracy. Therefore, in order to predict these defects before manufacturing a tool of press forming (press forming die), mechanical analysis of a press forming process by finite element analysis or the like is generally performed. In order to accurately predict how a blank is press-formed into a press formed part by the mechanical analysis of the press forming process, it is important to correctly set various analysis conditions in the mechanical analysis. Further, whether the analysis conditions are correct is determined by performing comparison with an actual press formed part.

One of important comparison items between the actual press formed part and an analysis result of the press formed part obtained by mechanical analysis is a peripheral shape of the press formed part. The peripheral shape of the press formed part is significantly affected by three factors including a setting position of a blank in a tool of press forming used for press forming, self-weight deflection when the blank is set in the tool of press forming, and a contact and sliding situation with the tool of press forming when the blank is sandwiched by the tool of press forming. Therefore, whether the respective peripheral shapes of the actual press formed part and the press formed part obtained by mechanical analysis match each other is a criterion for determining that these three elements are appropriately set. In particular, in deep drawing (drawing) in which an end of the blank is first sandwiched by the tool of press forming and then a central portion of the blank is formed, the peripheral shape of the press formed part is an important factor that determines whether the press formed part can be formed.

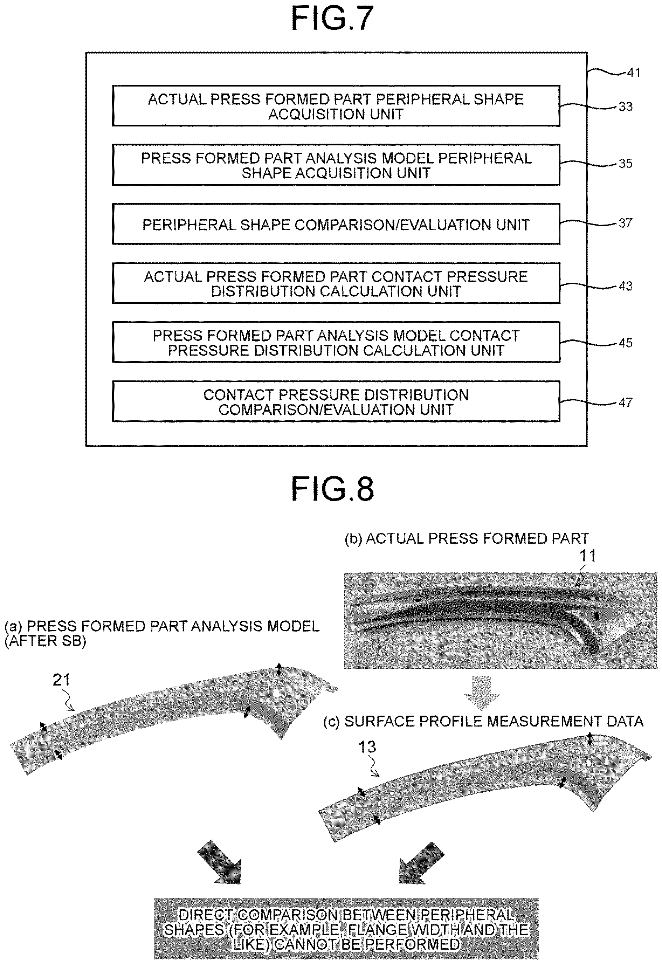

However, it is not easy to compare the peripheral shape of the actual press formed part with the peripheral shape of the press formed part obtained by mechanical analysis of the press forming process. This is because the shape of the press formed part after press forming is different from the shape of the forming bottom dead center in the tool of press forming due to elastic deformation called springback when the press formed part is taken out from the tool of press forming. On the other hand, according to the mechanical analysis of the press forming process, it is possible to predict the forming bottom dead center in the tool of press forming and the peripheral shape of the press formed part after springback. However, as illustrated in FIG. 8, a peripheral shape of an actual press formed part (an actual press formed part 11) after springback does not necessarily match a peripheral shape of a press formed part (a press formed part analysis model 21) after springback by mechanical analysis, and thus these peripheral shapes cannot be directly compared with each other.

Regarding the comparison between the peripheral shape of the actual press formed part and the peripheral shape of the press formed part obtained by mechanical analysis, accuracy of the peripheral shape of the press formed part obtained by mechanical analysis is evaluated by a method of measuring a distance between a blank end and a portion having a characteristic shape in the press formed part and comparing the distance with an analysis result of the mechanical analysis, as generally disclosed in Non Patent Literature 1, or by evaluating a change amount (inflow) of the outer shape by superposing an original (before press forming) blank shape on the press formed part, as disclosed in Non Patent Literature 2. The same applies to a case of evaluating the peripheral shapes of a plurality of press formed parts obtained by mechanical analysis in which analysis conditions are changed. This is because even press formed parts formed with the same tool of press forming do not necessarily have the same peripheral shape after springback due to, for example, a difference in lubricating oil or material strength.

### Citation List

### Non Patent Literature

Non Patent Literature 1: Plasticity and processing, Vol. 56, No. 651, pp. 311-316
Non Patent Literature 2: Plasticity and processing, Vol. 59, No. 689, pp. 107-113

### Summary

### Technical Problem

However, in order to evaluate the peripheral shape of the entire press formed part, it is necessary to perform an operation of measuring a surface profile at many portions in the press formed part, and there is a problem that accuracy is not high. For example, as disclosed in Non Patent Literature 1, in the method of measuring the distance between the blank end and the characteristic shape in the press formed part and comparing the distance with the mechanical analysis result, for example, when a distance between a ridge line section end of a tool of press forming and the blank end is measured, it is difficult to strictly determine a position of the ridge line section end because the ridge line section is a curved surface. For this reason, for example, there is room for a difference depending on a measurer. In addition, as disclosed in Non Patent Literature 2, in the method of evaluating the change amount (inflow) of the outer shape by superposing the original blank shape on the press formed part, since a result is greatly different depending on criteria used to superpose the original blank shape on the press formed part, there is room for a difference depending on a measurer, and it is difficult to clearly determine the measurement criteria. Therefore, it is a problem to accurately compare peripheral shapes with high reproducibility regardless of a measurer.

However, when an outer peripheral portion of the press formed part is deformed in a press stroke direction, it is difficult to superpose the shape of the flat original blank on the press formed part. Therefore, although importance of comparing the peripheral shape of the actual press formed part with the peripheral shape of the press formed part by mechanical analysis and evaluating a comparison result has been recognized, the importance has been considered only as one evaluation index due to difficulty of an evaluation method.

In addition, a contact pressure distribution from the tool of press forming in the press formed part at the forming bottom dead center is considered to be important information on the peripheral shape of the press formed part. However, although it is possible to obtain the contact pressure distribution acting on the press formed part by mechanical analysis, a method of obtaining the contact pressure distribution from the tool of press forming in the actual press formed part has not been established. Therefore, even if the peripheral shape of the actual press formed part can be compared with the peripheral shape of the press formed part by mechanical analysis, it is not possible to appropriately evaluate a factor of a difference in the peripheral shape.

Further, it is difficult to appropriately evaluate the factor causing the difference between the peripheral shape of the actual press formed part (actual press formed part) and the peripheral shape of the press formed part (press formed part analysis model) by mechanical analysis and, as such, it is also difficult to improve prediction accuracy of the peripheral shape of the press formed part analysis model. Therefore, there is a problem that dimensional accuracy of the peripheral shape cannot be sufficiently improved even if the actual press formed part is press-formed by adjusting a press forming condition based on the peripheral shape of the press formed part analysis model having low prediction accuracy.

The present invention has been made in order to solve the above-described problems, and an object of the present invention is to provide a method, a device, and a program of evaluating a peripheral shape of a press formed part, capable of accurately and reproducibly comparing a peripheral shape of an actual press formed part that is actually press-formed with a peripheral shape of a press formed part analysis model obtained by elastoplastic mechanical analysis in a process of press forming the actual press formed part, and capable of appropriately evaluating each of the peripheral shapes. Another object of the present invention is to provide a method of manufacturing a press formed part, in which the method is performed to manufacture an actual press formed part having improved dimensional accuracy obtained by improving prediction accuracy based on evaluation of a peripheral shape of a press formed part analysis model and then adjusting a press forming condition so as to improve dimensional accuracy of the peripheral shape.

### Solution to Problem

A method according to the present invention of evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes includes: an actual press formed part peripheral shape acquisition step of generating a press formed part workpiece shape model from three-dimensional surface profile measurement data acquired by measuring a surface profile of the actual press formed part after die release of the actual press formed part and springback thereof, performing mechanical analysis in a process of sandwiching the press formed part workpiece shape model up to a forming bottom dead center by a model of the tool of press forming of the tool of press forming, acquiring a press formed part workpiece bottom dead center shape model at the forming bottom dead center, and acquiring a peripheral shape of the obtained press formed part workpiece bottom dead center shape model as the peripheral shape of the actual press formed part; a press formed part analysis model peripheral shape acquisition step of obtaining the press formed part analysis model at the forming bottom dead center by performing elastoplastic mechanical analysis in a process of press forming a blank model of the blank using the model of the tool of press forming over a single process or a plurality of processes, and acquiring the peripheral shape of the obtained press formed part analysis model; and a peripheral shape comparison/evaluation step of comparing the peripheral shape of the actual press formed part acquired in the actual press formed part peripheral shape acquisition step with the peripheral shape of the press formed part analysis model acquired in the press formed part analysis model peripheral shape acquisition step and evaluating each of the peripheral shapes.

The mechanical analysis in the actual press formed part peripheral shape acquisition step may be an elastic finite element analysis or an elasto-plastic finite element analysis, and the elastoplastic mechanical analysis in the press formed part analysis model peripheral shape acquisition step may be the elasto-plastic finite element analysis.

When the process of press forming the actual press formed part is divided for respective portions of the actual press formed part, the model of the tool of press forming in the actual press formed part peripheral shape acquisition step may be formed as one model of the tool of press forming obtained by combining the models of the tools of press forming of respective tools of press forming adopted to press-form the respective portions of the actual press formed part.

The method of evaluating a peripheral shape of a press formed part may further includes: an actual press formed part contact pressure distribution calculation step of calculating, as a contact pressure distribution from the tool of press forming acting on the actual press formed part, a contact pressure distribution with the model of the tool of press forming acting on the press formed part workpiece bottom dead center shape model obtained in the actual press formed part peripheral shape acquisition step; a press formed part analysis model contact pressure distribution calculation step of calculating a contact pressure distribution with the model of the tool of press forming acting on the press formed part analysis model at the forming bottom dead center, the press formed part analysis model being obtained in the press formed part analysis model peripheral shape acquisition step; and a contact pressure distribution comparison/evaluation step of comparing the contact pressure distribution acting on the actual press formed part, the contact pressure distribution being calculated in the actual press formed part contact pressure distribution calculation step, with the contact pressure distribution acting on the press formed part analysis model, the contact pressure distribution being calculated in the press formed part analysis model contact pressure distribution calculation step, and evaluating each of the contact pressure distributions.

The method of evaluating a peripheral shape of a press formed part may further includes: an actual press formed part contact pressure distribution calculation step of calculating, as a contact pressure distribution from the tool of press forming acting on the actual press formed part, a contact pressure distribution with the model of the tool of press forming acting on the press formed part workpiece bottom dead center shape model obtained in the actual press formed part peripheral shape acquisition step; a press formed part analysis model contact pressure distribution calculation step of calculating a contact pressure distribution with the model of the tool of press forming acting on the press formed part analysis model at the forming bottom dead center, the press formed part analysis model being obtained in the press formed part analysis model peripheral shape acquisition step; and a contact pressure distribution comparison/evaluation step of comparing the contact pressure distribution acting on the actual press formed part, the contact pressure distribution being calculated in the actual press formed part contact pressure distribution calculation step, with the contact pressure distribution acting on the press formed part analysis model, the contact pressure distribution being calculated in the press formed part analysis model contact pressure distribution calculation step, and evaluating each of the contact pressure distributions.

A device according to the present invention for evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes includes: an actual press formed part peripheral shape acquisition unit configured to generate a press formed part workpiece shape model from three-dimensional surface profile measurement data acquired by measuring a surface profile of the actual press formed part after die release of the actual press formed part and springback thereof, to perform mechanical analysis in a process of sandwiching the press formed part workpiece shape model up to a forming bottom dead center by a model of the tool of press forming of the tool of press forming, to acquire a press formed part workpiece bottom dead center shape model at the forming bottom dead center, and to acquire a peripheral shape of the obtained press formed part workpiece bottom dead center shape model as the peripheral shape of the actual press formed part; a press formed part analysis model peripheral shape acquisition unit configured to acquire the press formed part analysis model at the forming bottom dead center by performing elastoplastic mechanical analysis in a process of press forming a blank model of the blank using the model of the tool of press forming over a single process or a plurality of processes, and to acquire the peripheral shape of the obtained press formed part analysis model; and a peripheral shape comparison/evaluation unit configured to compare the peripheral shape of the actual press formed part acquired by the actual press formed part peripheral shape acquisition unit with the peripheral shape of the press formed part analysis model acquired by the press formed part analysis model peripheral shape acquisition unit and evaluate each of the peripheral shapes.

The device for evaluating a peripheral shape of a press formed part may further includes: an actual press formed part contact pressure distribution calculation unit configured to calculate, as a contact pressure distribution from the tool of press forming acting on the actual press formed part, a contact pressure distribution with the model of the tool of press forming acting on the press formed part workpiece bottom dead center shape model acquired in the actual press formed part peripheral shape acquisition unit; a press formed part analysis model contact pressure distribution calculation unit configured to calculate a contact pressure distribution with the model of the tool of press forming acting on the press formed part analysis model at the forming bottom dead center, the press formed part analysis model being obtained in the press formed part analysis model peripheral shape acquisition unit; and a contact pressure distribution comparison/evaluation unit configured to compare the contact pressure distribution acting on the actual press formed part, the contact pressure distribution being calculated by the actual press formed part contact pressure distribution calculation unit, with the contact pressure distribution acting on the press formed part analysis model, the contact pressure distribution being calculated by the press formed part analysis model contact pressure distribution calculation unit, and evaluate each of the contact pressure distributions.

A program according to the present invention for evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes causes a computer to function as: an actual press formed part peripheral shape acquisition unit configured to generate a press formed part workpiece shape model from three-dimensional surface profile measurement data acquired by measuring a surface profile of the actual press formed part after die release of the actual press formed part and springback thereof, to perform mechanical analysis in a process of sandwiching the press formed part workpiece shape model up to a forming bottom dead center by a model of the tool of press forming of the tool of press forming, to acquire a press formed part workpiece bottom dead center shape model at the forming bottom dead center, and to acquire a peripheral shape of the obtained press formed part workpiece bottom dead center shape model as the peripheral shape of the actual press formed part; a press formed part analysis model peripheral shape acquisition unit configured to obtain the press formed part analysis model at the forming bottom dead center by performing elastoplastic mechanical analysis in a process of press forming a blank model of the blank using the model of the tool of press forming over a single process or a plurality of processes, and to acquire the peripheral shape of the obtained press formed part analysis model; and a peripheral shape comparison/evaluation unit configured to compare the peripheral shape of the actual press formed part acquired by the actual press formed part peripheral shape acquisition unit with the peripheral shape of the press formed part analysis model acquired by the press formed part analysis model peripheral shape acquisition unit and evaluate each of the peripheral shapes.

The program further causes the computer to function as: an actual press formed part contact pressure distribution calculation unit configured to calculate, as a contact pressure distribution from the tool of press forming acting on the actual press formed part, a contact pressure distribution with the model of the tool of press forming acting on the press formed part workpiece bottom dead center shape model obtained by the actual press formed part peripheral shape acquisition unit; a press formed part analysis model contact pressure distribution calculation unit configured to calculate a contact pressure distribution with the model of the tool of press forming acting on the press formed part analysis model at the forming bottom dead center, the press formed part analysis model being obtained by the press formed part analysis model peripheral shape acquisition unit; and a contact pressure distribution comparison/evaluation unit configured to compare the contact pressure distribution acting on the actual press formed part, the contact pressure distribution being calculated by the actual press formed part contact pressure distribution calculation unit, with the contact pressure distribution acting on the press formed part analysis model, the contact pressure distribution being calculated by the press formed part analysis model contact pressure distribution calculation unit, and evaluate each of the contact pressure distributions.

A method according to the present invention of manufacturing a press formed part is performed to manufacture an actual press formed part by adjusting a press forming condition so as to improve dimensional accuracy of a peripheral shape and includes: a peripheral shape prediction accuracy acquisition step of obtaining, as prediction accuracy of a peripheral shape at a forming bottom dead center of a press formed part analysis model, a difference between the peripheral shape at the forming bottom dead center of the press formed part analysis model obtained by elastoplastic mechanical analysis in a process of press forming the actual press formed part and a peripheral shape at a forming bottom dead center of the actual press formed part obtained by actually press forming a blank using a tool of press forming based on the method of evaluating the peripheral shape of the press formed part, according to the present invention; an analysis condition adjustment step of adjusting, based on the prediction accuracy of the peripheral shape of the press formed part analysis model, an analysis condition of the press formed part analysis model in the elastoplastic mechanical analysis in the process of press forming the actual press formed part; a press forming condition adjustment step of adjusting a press forming condition in the elastoplastic mechanical analysis in the process of press forming the actual press formed part so as to allow a deviation between the peripheral shape at the forming bottom dead center of the press formed part analysis model obtained under the adjusted analysis condition and a target of the peripheral shape at the forming bottom dead center of the actual press formed part to fall within a predetermined range; and a press forming step of actually press forming the blank using the tool of press forming under the press forming condition adjusted in the press forming condition adjustment step and manufacturing the actual press formed part.

### Advantageous Effects of Invention

In the present invention, positioning is performed, at the forming bottom dead center of the same model of a tool of press forming, for a press formed part workpiece shape model generated based on a three-dimensional surface profile of an actual press formed part that is actually press-formed and a press formed part analysis model obtained by elastoplastic mechanical analysis in a process of press forming the actual press formed part. Therefore, a peripheral shape of the actual press formed part at the forming bottom dead center before springback and a peripheral shape of the press formed part analysis model can be accurately compared with each other with high reproducibility, and each of the peripheral shapes can be appropriately evaluated. Furthermore, since a contact pressure distribution of the actual press formed part at the forming bottom dead center can be obtained, a difference between the peripheral shape of the actual press formed part at the forming bottom dead center and the peripheral shape of the press formed part analysis model can be evaluated in association with a difference in the contact pressure distribution at the forming bottom dead center. As a result, it is possible to appropriately evaluate a deviation of a setting position of a blank in a tool of press forming and a difference in material inflow balance in a press forming process as the difference in the peripheral shape and the difference in the contact pressure distribution. As a result, since an analysis condition in the mechanical analysis can be correctly set while comparison with the actual press formed part is performed, forming defectiveness such as forming defects of dimensional accuracy can be prevented. Alternatively, it is possible to prevent forming defectiveness by detecting an abnormality in actual press forming and correcting the abnormality.

Furthermore, in the present invention, an analysis condition of elastoplastic mechanical analysis in the process of press forming is adjusted so as to improve prediction accuracy based on the evaluation of the peripheral shape of the press forming analysis model evaluated as described above. Subsequently, in the elastoplastic mechanical analysis in the process of press forming under the adjusted analysis condition, the press forming condition is adjusted so as to improve the dimensional accuracy of the peripheral shape of the press formed part analysis model. By actually performing press forming using the tool of press forming under the adjusted press forming condition, it is possible to manufacture the actual press formed part having improved dimensional accuracy of the peripheral shape. As a result, it is possible to suppress trouble in performing parts assembly with other parts. In addition, the dimensional accuracy allowed for the peripheral shape of the actual press formed part can be satisfied without repeating adjustment of a blank position, a die shape, and the like many times. As a result, the cost and period of preparation for production of the actual press formed part can be significantly reduced. Further, according to the present invention, since an actual press forming condition can be changed in accordance with a sign of variation in the peripheral shape during mass production of the actual press formed part, such as, wear or deformation of the tool of press forming, it is also possible to suppress occurrence of a large number of dimensional defects in the peripheral shape of the actual press formed part.

### Brief Description of Drawings

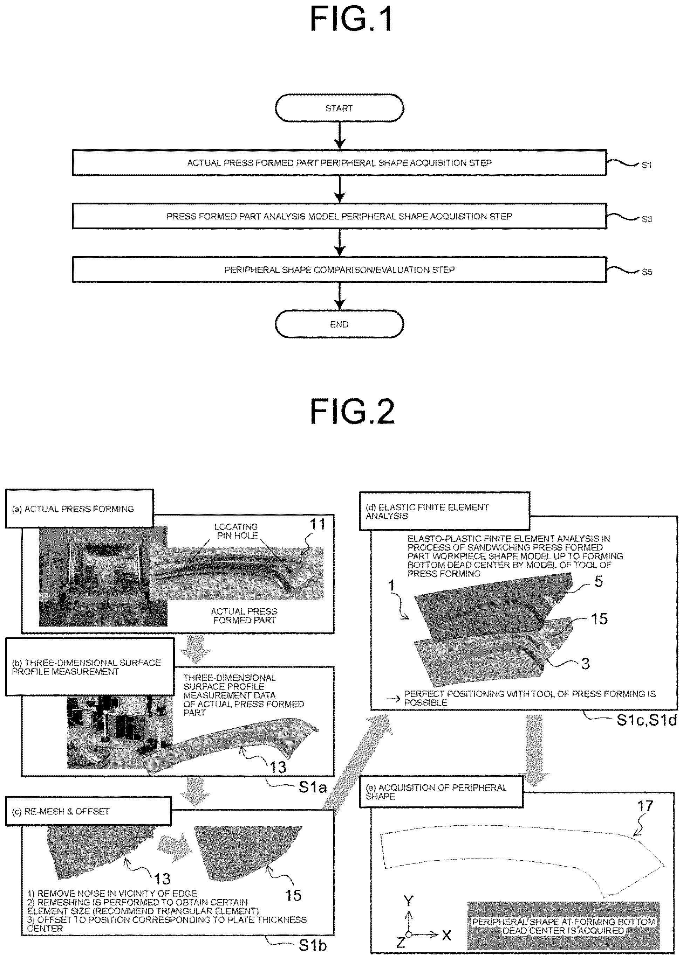

FIG. 1 is a flowchart illustrating a processing flow of a method of evaluating a peripheral shape of a press formed part according to a first embodiment of the present invention.
FIG. 2 is a diagram illustrating a process of acquiring a peripheral shape of an actual press formed part in the method of evaluating the peripheral shape of the press formed part according to the first embodiment of the present invention ((a) a press forming step of the actual press formed part, (b) three dimensional surface profile measurement of the actual press formed part, (c) conversion of three-dimensional surface profile data into a press formed part workpiece shape model (remeshing and offset), (d) mechanical analysis in a process of sandwiching the press formed part workpiece shape model by a model of a tool of press forming, and (e) acquisition of a peripheral shape of a press formed part workpiece bottom dead center shape model at the forming bottom dead center).

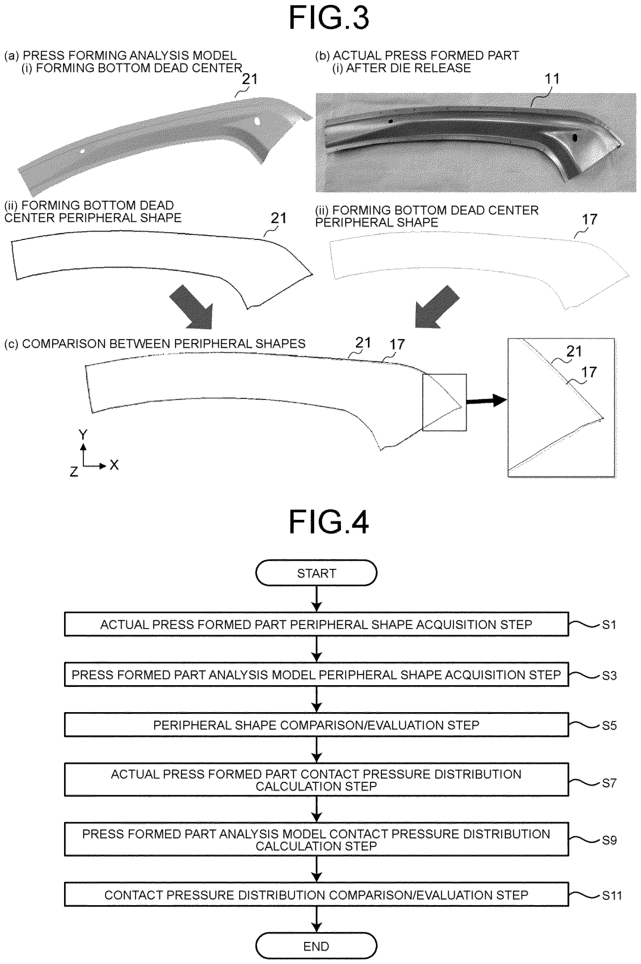

FIG. 3 is a diagram illustrating (a) a peripheral shape of an actual press formed part acquired by using the press formed part workpiece bottom dead center shape model, (b) a peripheral shape of a press formed part analysis model acquired by press forming analysis, and (c) comparison between the peripheral shape of the actual press formed part and the peripheral shape of the press formed part analysis model, which are acquired by the method of evaluating the peripheral shape of the press formed part according to the first embodiment of the present invention.
FIG. 4 is a flowchart illustrating a processing flow of another aspect of the method of evaluating the peripheral shape of the press formed part according to the first embodiment of the present invention.

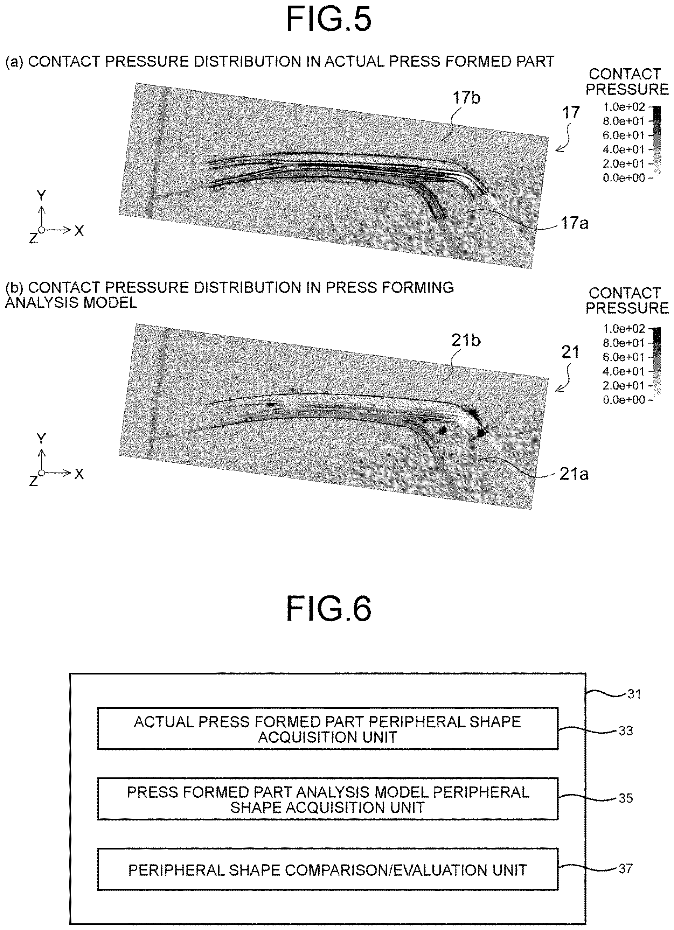

FIG. 5 is a contour diagram illustrating an example of a contact pressure distribution of a press formed part workpiece bottom dead center shape model and a contact pressure distribution of a press formed part analysis model, which are obtained in another aspect of the method of evaluating the peripheral shape of the press formed part according to the first embodiment of the present invention ((a) a contact pressure distribution of the press formed part workpiece bottom dead center shape model, and (b) a contact pressure distribution of the press formed part analysis model).
FIG. 6 is a block diagram of a device of evaluating the peripheral shape of the press formed part according to the first embodiment of the present invention, and a diagram illustrating a function of a program of evaluating the peripheral shape of the press formed part according to the first embodiment of the present invention.
FIG. 7 is a block diagram of another aspect of the device of evaluating the peripheral shape of the press formed part according to the first embodiment of the present invention, and a diagram illustrating a function of another aspect of the program of evaluating the peripheral shape of the press formed part according to the first embodiment of the present invention.
FIG. 8 is a diagram illustrating a problem in comparing the peripheral shape of the press formed part analysis model obtained by press forming analysis and springback analysis with the peripheral shape of the actual press formed part after press forming and springback ((a) the press formed part analysis model obtained by press forming analysis and springback analysis, (b) the actual press formed part, and (c) three-dimensional surface profile measurement data of the actual press formed part).

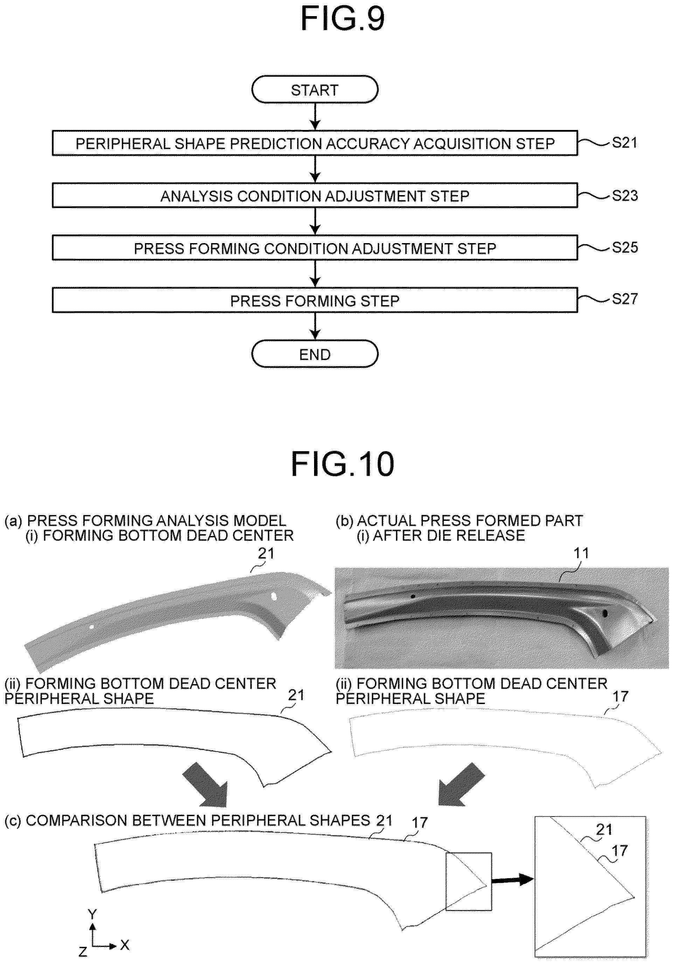

FIG. 9 is a flowchart illustrating a processing flow in a method of manufacturing a press formed part according to a second embodiment of the present invention.
FIG. 10 is a diagram illustrating (a) a peripheral shape of a press formed part workpiece bottom dead center shape model acquired as a peripheral shape at the forming bottom dead center of an actual press formed part, (b) a peripheral shape at the forming bottom dead center of a press formed part analysis model obtained by elasto-plastic finite element analysis by adjusting an analysis condition, and (c) comparison between the peripheral shape of the actual press formed part at the forming bottom dead center and the peripheral shape of the press formed part analysis model at the forming bottom dead center, in the method of manufacturing the press formed part according to the second embodiment of the present invention.

### Description of Embodiments

### [First embodiment]

Hereinafter, a method, a device, and a program of evaluating a peripheral shape of a press formed part according to a first embodiment of the present invention will be described with reference to FIGS. 1 to 7. In the first embodiment, as an example, an actual press formed part 11 having a hat-shaped cross section simulating a front pillar upper of an automobile illustrated in FIG. 2(a) is used. The actual press formed part 11 is obtained by press forming a cold rolled steel sheet having a class of 980 MPa (MPa-class) and a sheet thickness of 1.4 mm. In addition, X, Y, and Z in FIGS. 2, 3, and 5 of the present application respectively indicate the longitudinal direction (X direction), the width direction (Y direction), and the height direction (Z direction) of the actual press formed part 11, a three-dimensional surface profile measurement data 13, a press formed part workpiece shape model 15, a press formed part workpiece bottom dead center shape model 17, and a press formed part analysis model 21.

### <Method of evaluating peripheral shape of press formed part>

A method of evaluating the peripheral shape of the press formed part according to the first embodiment of the present invention is performed by comparing, as illustrated in FIG. 2 as an example, a peripheral shape at the forming bottom dead center of the actual press formed part 11 obtained by actually press forming a blank using a tool of press forming, and, as illustrated in FIG. 3(a) as an example, a peripheral shape at the forming bottom dead center of the press formed part analysis model 21 obtained by elastoplastic mechanical analysis in a process of press forming the actual press formed part 11, and evaluating each of the peripheral shapes. As illustrated in FIG. 1, the method of evaluating the peripheral shape of the press formed part includes an actual press formed part peripheral shape acquisition step S1, a press formed part analysis model peripheral shape acquisition step S3, and a peripheral shape comparison/evaluation step S5. Each of the above steps will be described below.

### <<Actual press formed part peripheral shape acquisition step>>

The actual press formed part peripheral shape acquisition step S1 is a step of generating the press formed part workpiece shape model 15 from the three-dimensional surface profile measurement data 13 acquired by measuring the surface profile after die release of the actual press formed part 11 and springback thereof are performed, performing mechanical analysis of a process of sandwiching the press formed part workpiece shape model 15 up to the forming bottom dead center by a model of a tool of press forming 1 of the tool of press forming, obtaining the press formed part workpiece bottom dead center shape model 17 at the forming bottom dead center, and acquiring the peripheral shape of the press formed part workpiece bottom dead center shape model 17 as the peripheral shape of the actual press formed part 11.

In the actual press formed part peripheral shape acquisition step S1, first, as illustrated in FIGS. 2(a) and 2(b), the three-dimensional surface profile measurement data 13 is acquired by measuring the surface profile of the actual press formed part 11 (S1a). Next, in order to handle the obtained three-dimensional surface profile measurement data 13 as a shell element for mechanical analysis, that is, elastic mechanical analysis, as illustrated in FIG. 2(c), remeshing is performed to obtain an element (for example, a triangular element) having a constant element size and then offset to a position corresponding to the plate thickness center is performed, thereby generating the press formed part workpiece shape model 15 (S1b). As necessary, in the three-dimensional surface profile measurement data 13, an operation of removing noise in the vicinity of an edge (contour) may be performed. In the first embodiment, the plate thickness of the press formed part workpiece shape model 15 is kept constant at the initial plate thickness of 1.4 mm, but the plate thickness measured for each element or each region may be provided. Instead of generating the press formed part workpiece shape model with the shell element, a method of acquiring the three-dimensional surface profile measurement data by offsetting the acquired three-dimensional surface profile measurement data to the back surface side by the plate thickness, or acquiring the three-dimensional surface profile measurement data of the front and back surfaces by measuring the three-dimensional surface profile measurement data of each of the front surface side and the back surface side, dividing a three-dimensional space sandwiched between the pieces of three-dimensional surface profile measurement data of the front and back surfaces into solid elements, and generating the press formed part workpiece shape model may be used.

Next, the press formed part workpiece shape model 15 is disposed at a position where the press formed part workpiece shape model 15 can be sandwiched by the model of the tool of press forming 1 (S1c). At this time, the positioning of the press formed part workpiece shape model 15 may be roughly manually adjusted so that the press formed part workpiece shape model 15 does not significantly deviate in the process of being sandwiched up to the forming bottom dead center by the model of the tool of press forming 1.

Specifically, parallel movement and/or rotational movement are performed so that a characteristic shape portion of the press formed part workpiece shape model 15 does not deviate when the press formed part workpiece shape model 15 is sandwiched by the model of the tool of press forming 1 using a ridge line section shape, a peripheral shape, and a characteristic shape such as a positioning hole/pin of the model of the tool of press forming 1 as a mark. Alternatively, automatic positioning of the press formed part workpiece shape model 15 may be once performed by a best-fit or the like with reference to a lower die model 3 of the model of the tool of press forming 1, and then parallel movement of an upper die model 5 may be performed in the press forming direction up to a position at which the upper die model 5 is not in contact with the lower die model 3.

Next, mechanical analysis of the process of sandwiching the press formed part workpiece shape model 15 by the model of the tool of press forming 1 is performed (S1d), and as illustrated in FIG. 3(b), the press formed part workpiece bottom dead center shape model 17 at the forming bottom dead center is acquired.

As the mechanical analysis in the actual press formed part peripheral shape acquisition step S1, elastic finite element analysis is performed in the first embodiment, but the present invention is not limited thereto, and elasto-plastic finite element analysis may be performed.

As described above, by performing the elastic finite element analysis in the process of sandwiching the press formed part workpiece shape model 15 up to the forming bottom dead center by the model of the tool of press forming 1, it is possible to perform positioning of the press formed part workpiece bottom dead center shape model 17 with the model of the tool of press forming 1 as a reference.

Further, the first embodiment is directed to a case in which the actual press formed part 11 is subjected to crash forming by the tool of press forming including the lower die and the upper die, but in the case of deep drawing, the tool of press forming includes a cushion (blank holder) for sandwiching a blank in cooperation with the upper die. In this case, the model of the tool of press forming includes a cushion model (not illustrated), the cushion model is disposed at the forming bottom dead center position from the beginning, and a process of sandwiching the press formed part workpiece shape model between the lower die model and the upper die model may be analyzed.

### <<Press formed part analysis model peripheral shape acquisition step>>

The press formed part analysis model peripheral shape acquisition step S3 is a step of obtaining the press formed part analysis model 21 at the forming bottom dead center and acquiring the peripheral shape of the obtained press formed part analysis model 21, as illustrated in FIG. 3(a), by performing elastoplastic mechanical analysis in the process of press forming a blank model of a blank using the model of the tool of press forming 1.

In the first embodiment, in the press formed part analysis model peripheral shape acquisition step S3, elasto-plastic finite element analysis is performed as the elastoplastic mechanical analysis.

In the first embodiment, before executing the press formed part analysis model peripheral shape acquisition step S3, the blank model (not illustrated) used for press forming analysis of the press formed part analysis model 21 and the model of the tool of press forming 1 (FIG. 2(d)) are acquired in advance.

### <<Peripheral shape comparison/evaluation step>>

The peripheral shape comparison/evaluation step S5 is a step of comparing the peripheral shape of the actual press formed part 11 acquired in the actual press formed part peripheral shape acquisition step S1 with the peripheral shape of the press formed part analysis model 21 acquired in the press formed part analysis model peripheral shape acquisition step S3 and evaluating each of the peripheral shapes.

FIG. 3(c) illustrates a result of comparison between the peripheral shape at the forming bottom dead center of the press formed part analysis model 21 acquired by the method of evaluating the peripheral shape of the press formed part according to the first embodiment and the peripheral shape of the press formed part workpiece bottom dead center shape model 17 obtained as the peripheral shape of the actual press formed part 11 at the forming bottom dead center. Although the peripheral shape of the press formed part analysis model 21 substantially coincides with the peripheral shape of the actual press formed part 11, it has been found that a deviation occurs therebetween. The actual press formed part 11 targeted in the first embodiment has a structure in which a locating pin (refer to FIG. 2) is provided at each of two places of the tool of press forming to prevent a deviation of a blank in a press forming process, and thus a difference therebetween is small.

In the case of such deep drawing without the locating pins, it is considered that material inflow balance of the blank into the tool of press forming by a blank holder is disrupted, which affects occurrence of wrinkles and dimensional accuracy of the actual press formed part, and also affects the peripheral shape of the actual press formed part. Therefore, the present invention is considered to be more useful in the case of deep drawing.

As described above, in the method of evaluating the peripheral shape of the press formed part according to the first embodiment, positioning is performed, using the same model of the tool of press forming 1, for both the press formed part workpiece bottom dead center shape model 17 acquired as the peripheral shape of the actual press formed part 11 at the forming bottom dead center and the press formed part analysis model 21 at the forming bottom dead center. Therefore, by comparing the peripheral shape of the press formed part analysis model 21 with the peripheral shape of the actual press formed part 11 as a reference, it is possible to achieve high reproducibility and accuracy.

By comparing the peripheral shapes, it is possible to appropriately evaluate a difference between the peripheral shapes caused by the deviation of the setting position of the blank in the tool of press forming and the difference in the material inflow balance in the press forming process. Such a difference in the peripheral shape of the press formed part is different in shape after the press formed part is released from the tool of press forming and is spring-backed and, as such, it is difficult to directly compare the actual press formed part with the press formed part analysis model. Therefore, it is preferable to compare the actual press formed part with the press formed part analysis model in the forming bottom dead center state. As a result, since an analysis condition in the mechanical analysis can be correctly set while comparison with the actual press formed part is performed, forming defectiveness such as forming defects of dimensional accuracy can be prevented. Alternatively, it is possible to prevent forming defectiveness by detecting an abnormality in actual press forming and correcting the abnormality.

As another aspect of the method of evaluating the peripheral shape of the press formed part according to the first embodiment, in addition to the actual press formed part peripheral shape acquisition step S1, the press formed part analysis model peripheral shape acquisition step S3, and the peripheral shape comparison/evaluation step S5 of the method of evaluating the peripheral shape of the press formed part according to the first embodiment described above, the method can further include, as illustrated in FIG. 4, an actual press formed part contact pressure distribution calculation step S7, a press formed part analysis model contact pressure distribution calculation step S9, and a contact pressure distribution comparison/evaluation step S11.

### <<Actual press formed part contact pressure distribution calculation step>>

The actual press formed part contact pressure distribution calculation step S7 is a step of calculating a contact pressure distribution with the model of the tool of press forming 1 acting on the press formed part workpiece bottom dead center shape model 17 at the forming bottom dead center, in which the press formed part workpiece bottom dead center shape model 17 is obtained in the actual press formed part peripheral shape acquisition step S1, as a contact pressure distribution from the tool of press forming acting on the actual press formed part 11.

### <<Press formed part analysis model contact pressure distribution calculation step>>

The press formed part analysis model contact pressure distribution calculation step S9 is a step of calculating a contact pressure distribution with the model of the tool of press forming 1 acting on the press formed part analysis model 21 at the forming bottom dead center, in which the press formed part analysis model 21 is obtained in the press formed part analysis model peripheral shape acquisition step S3.

### <<Contact pressure distribution

### comparison/evaluation step>>

The contact pressure distribution comparison/evaluation step S11 is a step of comparing the contact pressure distribution acting on the actual press formed part 11, the contact pressure distribution being calculated in the actual press formed part contact pressure distribution calculation step S7, with the contact pressure distribution acting on the press formed part analysis model 21, the contact pressure distribution being calculated in the press formed part analysis model contact pressure distribution calculation step S9, and evaluating each of the contact pressure distributions.

FIG. 5 illustrates, as an example, a contour diagram of the contact pressure distribution of the press formed part workpiece bottom dead center shape model 17 obtained as the contact pressure distribution at the forming bottom dead center acting on the actual press formed part 11 and the contact pressure distribution at the forming bottom dead center of the press formed part analysis model 21, obtained by another aspect of the method of evaluating the peripheral shape of the press formed part according to the first embodiment.

As illustrated in FIG. 5, it can be seen that the press formed part workpiece bottom dead center shape model 17 has a higher contact pressure at a punch bottom portion 17a and a flange portion 17b than a contact pressure at a punch bottom portion 21a and a flange portion 21b of the press formed part analysis model 21. Therefore, it is considered that a difference in the peripheral shape between the press formed part workpiece bottom dead center shape model 17 and the press formed part analysis model 21, as illustrated in FIG. 3(c), is due to a difference in contact pressure distribution from the model of the tool of press forming at the forming bottom dead center.

As described above, in another aspect of the method of evaluating the peripheral shape of the press formed part according to the first embodiment, the difference between the peripheral shape of the actual press formed part and the peripheral shape of the press formed part analysis model can be evaluated in association with the difference in contact pressure distribution at the forming bottom dead center. As a result, since an analysis condition in the mechanical analysis can be correctly set while comparison with the actual press formed part is performed, forming defectiveness such as forming defects of dimensional accuracy can be prevented. Alternatively, it is possible to prevent forming defectiveness by detecting an abnormality in actual press forming and correcting the abnormality.

### <Device of evaluating peripheral shape of press formed part>

A device 31 of evaluating the peripheral shape of the press formed part according to the first embodiment of the present invention compares the peripheral shape at the forming bottom dead center of the actual press formed part 11 obtained by actually press forming a blank using the tool of press forming, as illustrated in FIGS. 2 and 3(b) as an example, with the peripheral shape at the forming bottom dead center of the press formed part analysis model 21 obtained by elastoplastic mechanical analysis in the process of press forming the actual press formed part 11, as illustrated in FIG. 3(a) as an example, and evaluates each of the peripheral shapes. As illustrated in FIG. 6, the device 31 of evaluating the peripheral shape of the press formed part includes an actual press formed part peripheral shape acquisition unit 33, a press formed part analysis model peripheral shape acquisition unit 35, and a peripheral shape comparison/evaluation unit 37.

### <<Actual press formed part peripheral shape acquisition unit>>

As illustrated in FIG. 2, the actual press formed part peripheral shape acquisition unit 33 generates the press formed part workpiece shape model 15 from the three-dimensional surface profile measurement data acquired by measuring the surface profile after the actual press formed part 11 is released from the tool of press forming and is spring-backed, performs mechanical analysis in the process of sandwiching the press formed part workpiece shape model 15 up to the forming bottom dead center by the model of the tool of press forming 1 of the tool of press forming, obtains the press formed part workpiece bottom dead center shape model 17 at the forming bottom dead center, and acquires the peripheral shape of the press formed part workpiece bottom dead center shape model 17 as the peripheral shape of the actual press formed part 11.

In the first embodiment, the actual press formed part peripheral shape acquisition unit 33 executes the above-described actual press formed part peripheral shape acquisition step S1 of the method of evaluating the peripheral shape of the press formed part according to the first embodiment.

### <<Press formed part analysis model peripheral shape acquisition unit>>

The press formed part analysis model peripheral shape acquisition unit 35 obtains the press formed part analysis model 21 at the forming bottom dead center, as illustrated in FIG. 2(a), by performing elastoplastic mechanical analysis in the process of press forming the blank model of the blank using the model of the tool of press forming 1, and acquires the peripheral shape of the obtained press formed part analysis model 21.

In the first embodiment, the press formed part analysis model peripheral shape acquisition unit 35 executes the press formed part analysis model peripheral shape acquisition step S3 of the method of evaluating the peripheral shape of the press formed part according to the first embodiment described above.

### <<Peripheral shape comparison/evaluation unit>>

As illustrated in FIG. 3(c), the peripheral shape comparison/evaluation unit 37 compares the peripheral shape of the actual press formed part 11 acquired by the actual press formed part peripheral shape acquisition unit 33 with the peripheral shape of the press formed part analysis model 21 acquired by the press formed part analysis model peripheral shape acquisition unit 35, and evaluates each of the peripheral shapes.

In the first embodiment, the peripheral shape comparison/evaluation unit 37 executes the peripheral shape comparison/evaluation step S5 of the method of evaluating the peripheral shape of the press formed part according to the first embodiment described above.

A device 41, which is another aspect of the device 31 of evaluating the peripheral shape of the press formed part according to the first embodiment, can be configured to further include, as illustrated in FIG. 7, an actual press formed part contact pressure distribution calculation unit 43, a press formed part analysis model contact pressure distribution calculation unit 45, and a contact pressure distribution comparison/evaluation unit 47, in addition to the actual press formed part peripheral shape acquisition unit 33, the press formed part analysis model peripheral shape acquisition unit 35, and the peripheral shape comparison/evaluation unit 37 of the device 31 of evaluating the peripheral shape of the press formed part according to the first embodiment.

### <<Actual press formed part contact pressure distribution calculation unit>>

As illustrated in FIG. 5(a), the actual press formed part contact pressure distribution calculation unit 43 calculates, as a contact pressure distribution from the tool of press forming acting on the actual press formed part 11, a contact pressure distribution with the model of the tool of press forming 1 acting on the press formed part workpiece bottom dead center shape model 17 at the forming bottom dead center, in which the press formed part workpiece bottom dead center shape model 17 is obtained by the actual press formed part peripheral shape acquisition unit 33.

### <<Press formed part analysis model contact pressure distribution calculation unit>>

As illustrated in FIG. 5(b), the press formed part analysis model contact pressure distribution calculation unit 45 calculates a contact pressure distribution with the model of the tool of press forming 1 acting on the press formed part analysis model 21 at the forming bottom dead center, in which the press formed part analysis model 21 is obtained by the press formed part analysis model peripheral shape acquisition unit 35.

### <<Contact pressure distribution

### comparison/evaluation unit>>

The contact pressure distribution comparison/evaluation unit 47 compares a contact pressure distribution acting on the actual press formed part 11, in which the contact pressure distribution is calculated by the actual press formed part contact pressure distribution calculation unit 43, with a contact pressure distribution acting on the press formed part analysis model 21, in which the contact pressure distribution is calculated by the press formed part analysis model contact pressure distribution calculation unit 45, and evaluates each of the contact pressure distributions.

### <Program of evaluating peripheral shape of press formed part>

The first embodiment of the present invention can be configured as a program of evaluating the peripheral shape of the press formed part. That is, the program of evaluating the peripheral shape of the press formed part according to the first embodiment of the present invention compares the peripheral shape of the actual press formed part obtained by actually press forming the blank using the tool of press forming with the peripheral shape of the press formed part analysis model obtained by the elastoplastic mechanical analysis in the process of press forming the actual press formed part, and evaluates each of the peripheral shapes. As illustrated in FIG. 6, the program of evaluating the peripheral shape of the press formed part causes a computer to function as the actual press formed part peripheral shape acquisition unit 33, the press formed part analysis model peripheral shape acquisition unit 35, and the peripheral shape comparison/evaluation unit 37.

As another aspect of the program of evaluating the peripheral shape of the press formed part according to the first embodiment of the present invention, as illustrated in FIG. 7, in addition to the actual press formed part peripheral shape acquisition unit 33, the press formed part analysis model peripheral shape acquisition unit 35, and the peripheral shape comparison/evaluation unit 37, the program of the another aspect can cause a computer to further function as the actual press formed part contact pressure distribution calculation unit 43, the press formed part analysis model contact pressure distribution calculation unit 45, and the contact pressure distribution comparison/evaluation unit 47.

As described above, in the device and the program of evaluating the peripheral shape of the press formed part according to the first embodiment as well, similarly to the method of evaluating the peripheral shape of the press formed part according to the first embodiment described above, positioning is performed, using the same model of the tool of press forming 1, for both of the press formed part workpiece bottom dead center shape model 17 obtained as the peripheral shape of the actual press formed part 11 and the press formed part analysis model 21 obtained by the elastoplastic mechanical analysis in the process of press forming the actual press formed part 11. Therefore, by comparing the peripheral shape of the press formed part analysis model 21 with the peripheral shape of the actual press formed part 11 as a reference, it is possible to accurately perform evaluation with high reproducibility and to appropriately perform the evaluation. As a result, analysis accuracy of the peripheral shape of the press formed part analysis model 21 can be evaluated.

Furthermore, the device and the program of evaluating the peripheral shape of the press formed part according to the present invention can compare the peripheral shape of the actual press formed part with the peripheral shape of the press formed part analysis model as a reference and appropriately perform evaluation. Furthermore, since a contact pressure distribution of the actual press formed part at the forming bottom dead center can be obtained, a difference between the peripheral shape of the actual press formed part at the forming bottom dead center and the peripheral shape of the press formed part analysis model can be evaluated in association with a difference in the contact pressure distribution at the forming bottom dead center. As a result, a deviation of the setting position of the blank in the tool of press forming and a difference in the material inflow balance in the press forming process can be appropriately evaluated as a difference in the peripheral shape and a difference in the contact pressure distribution. As a result, since an analysis condition in the mechanical analysis can be correctly set while comparison with the actual press formed part is performed, forming defectiveness such as forming defects of dimensional accuracy can be prevented. Alternatively, it is possible to prevent forming defectiveness by detecting an abnormality in actual press forming and correcting the abnormality.

The above description of the first embodiment of the present invention is directed to a case in which the entire actual press formed part is press-formed in a single step. However, in the present invention, the process of press forming the actual press formed part may be divided into a plurality of steps for each portion of the actual press formed part. In this case, in the present invention, the model of the tool of press forming used to acquire the peripheral shape of the press formed part workpiece bottom dead center shape model at the forming bottom dead center may be one model of the tool of press forming by combining the models of the tools of press forming of the respective tools of press forming for forming the respective portions of the actual press formed part.

In the analysis of the process of sandwiching the press formed part workpiece shape model in the model of the tool of press forming, a model of a tool of press forming of a tool of press forming for forming a part of the actual press formed part may be used. Then, positioning may be performed for a portion at which the press formed part workpiece shape model is sandwiched by the model of the tool of press forming and a portion in a press formed part analysis model corresponding to the portion.

In the above description, the forming bottom dead center of the tool of press forming is assumed to be a time point at which an interval between the lower die and the upper die becomes equal to a plate thickness of the blank. However, in the present invention, the forming bottom dead center includes a case in which the tool of press forming is stopped before the forming bottom dead center (5 mm, 10 mm, or the like, within 10 mm), and the actual press formed part formed up to before the forming bottom dead center may be compared with the press formed part analysis model.

In the first embodiment, all of the press formed part workpiece shape model 15, the press formed part workpiece bottom dead center shape model 17, and the press formed part analysis model 21 are modeled by a shell element (for example, a triangular element), but the present invention may be modeled by a solid element.

The model of the tool of press forming used in the first embodiment is a rigid body, but in the present invention, the model of the tool of press forming may be an elastic body or an elastoplastic body.

In another aspect of the first embodiment of the present invention, the contact pressure distribution of the actual press formed part and the contact pressure distribution of the press formed part analysis model at the forming bottom dead center are compared with each other to evaluate a relationship between the peripheral shape and the contact pressure distribution. However, the present invention may calculate a forming load acting on the actual press formed part and the press formed part analysis model at the forming bottom dead center and a deformation amount of the model of the tool of press forming at the forming bottom dead center instead of the contact pressure distribution, and may evaluate a relationship with the peripheral shape.

### [Second embodiment]

### <Method of manufacturing press formed part>

A method of manufacturing a press formed part according to a second embodiment of the present invention is performed to manufacture an actual press formed part by adjusting a press forming condition so as to improve dimensional accuracy of a peripheral shape. As illustrated in FIG. 9, the method of manufacturing the press formed part according to the second embodiment includes a peripheral shape prediction accuracy acquisition step S21, an analysis condition adjustment step S23, a press forming condition adjustment step S25, and a press forming step S27. Hereinafter, each of the above steps will be described for the actual press formed part 11 illustrated in FIG. 2 as an example.

### <<Peripheral shape prediction accuracy acquisition step>>

In the peripheral shape prediction accuracy acquisition step S21, the peripheral shape at the forming bottom dead center of the actual press formed part 11 obtained by actually press forming a blank using a tool of press forming is obtained by the method of evaluating the peripheral shape of the press formed part according to the first embodiment. Further, in the peripheral shape prediction accuracy acquisition step S21, elastoplastic mechanical analysis is performed in the process of press forming the actual press formed part 11 by the method according to the first embodiment, and the peripheral shape of the press formed part analysis model 21 at the forming bottom dead center is obtained. Then, a difference between the peripheral shape of the actual press formed part 11 at the forming bottom dead center and the peripheral shape of the press formed part analysis model 21 at the forming bottom dead center is obtained as prediction accuracy of the peripheral shape of the press formed part analysis model 21 at the forming bottom dead center.

The peripheral shape of the actual press formed part 11 at the forming bottom dead center can be acquired by performing the above-described actual press formed part peripheral shape acquisition step S1 according to the first embodiment (refer to FIG. 3(b) (ii)). FIG. 3 (b) (ii) is a diagram illustrating the peripheral shape of the press formed part workpiece bottom dead center shape model 17 obtained as the peripheral shape of the actual press formed part 11 at the forming bottom dead center. The peripheral shape of the press formed part analysis model 21 at the forming bottom dead center can be acquired by performing the above-described press formed part analysis model peripheral shape acquisition step S3 according to the first embodiment (FIGS. 3(a)(ii)).

The peripheral shape of the press formed part workpiece bottom dead center shape model 17 acquired in this manner and the peripheral shape of the press formed part analysis model 21 at the forming bottom dead center are calculated by performing positioning using the same model of the tool of press forming 1. Therefore, the peripheral shape of the press formed part workpiece bottom dead center shape model 17 can be compared with the peripheral shape of the press formed part analysis model 21 at the forming bottom dead center, and a difference therebetween can be obtained as the prediction accuracy of the peripheral shape of the press formed part analysis model 21 at the forming bottom dead center.

The difference between the peripheral shape of the press formed part workpiece bottom dead center shape model 17 and the peripheral shape of the press formed part analysis model 21 may be obtained by calculating a deviation amount of the peripheral shape of the press formed part analysis model 21 at the forming bottom dead center when the peripheral shape of the press formed part workpiece bottom dead center shape model 17 is used as a reference. For example, a vertical distance (an absolute value) from the peripheral shape of the press formed part workpiece bottom dead center shape model 17 to the peripheral shape of the press formed part analysis model 21 at the forming bottom dead center is calculated as the deviation amount.

### <<Analysis condition adjustment step>>

The analysis condition adjustment step S23 is a step of adjusting the analysis condition of the press formed part analysis model 21 in the elastoplastic mechanical analysis in the process of press forming the actual press formed part 11 so as to increase the prediction accuracy of the peripheral shape of the press formed part analysis model 21 at the forming bottom dead center.

Examples of the analysis condition that affects the prediction accuracy of the peripheral shape of the press formed part analysis model 21 at the forming bottom dead center include (i) an FEM analysis condition and (ii) a press forming analysis condition.
(i) The FEM analysis condition is an analysis condition on computing techniques related to a numerical analysis method and an approximation method of a model in performing elastoplastic mechanical analysis (finite element analysis) by the finite element method (FEM) as elastoplastic mechanical analysis in the process of press forming. Examples of the FEM analysis condition include a size of element divisions of a blank, the number of integral points in an element, a type of an element to be selected, and a material constitutive law of a metal material.
(ii) The press forming analysis condition refers to a computational analysis condition that is a premise for performing elastoplastic mechanical analysis in the process of press forming, and is a physical parameter related to behavior of a blank or a tool of press forming corresponding to actual press forming. Examples of the press forming analysis condition include a forming bottom dead center position of a tool of press forming, a friction coefficient between a tool of press forming and a blank material, a clearance of a tool of press forming (punch and die), and a forming speed of a tool of press forming.

FIG. 10(a) illustrates a result of obtaining the press formed part analysis model 21 at the forming bottom dead center, in which the press formed part analysis model 21 is obtained under the analysis condition adjusted based on the prediction accuracy of the peripheral shape of the press formed part analysis model 21 at the forming bottom dead center illustrated in FIG. 3(c). The result illustrated in FIG. 10(a) is obtained by adjusting the FEM analysis condition and the press forming analysis condition as the analysis condition as follows.

With respect to the FEM analysis condition, in order to reduce a prediction error of the peripheral shape due to the FEM analysis accuracy, the average element size of the blank was subdivided from 1.5 mm to 1.2 mm, and the number of integral points in the plate thickness direction was changed from 7 points to 9 points. Furthermore, a material model of the blank was changed from an isotropic hardening material model to a Yoshida-Uemori material model capable of more accurately reproducing a hardening property of a metal material and an elastic behavior during unloading.

On the other hand, regarding the press forming analysis condition, the friction coefficient between the model of the tool of press forming 1 and the blank was changed from 0.10 to 0.11 based on a state of deviation between the peripheral shape of the press formed part analysis model 21 at the forming bottom dead center and the peripheral shape of the press formed part workpiece bottom dead center shape model 17 in FIG. 3(c).

FIG. 10(c) illustrates a result of comparison between the peripheral shape of the press formed part analysis model 21 at the forming bottom dead center and the peripheral shape of the press formed part workpiece bottom dead center shape model 17 obtained as the peripheral shape of the actual press formed part 11 at the forming bottom dead center under the analysis condition adjusted in this manner. As illustrated in FIG. 10(c), the peripheral shape of the press formed part analysis model 21 at the forming bottom dead center favorably coincides with the peripheral shape of the press formed part workpiece bottom dead center shape model 17 by adjusting the analysis condition as described above. Then, as a result of calculating a deviation amount of the peripheral shape of the press formed part analysis model 21 at the forming bottom dead center with the peripheral shape of the press formed part workpiece bottom dead center shape model 17 as a reference, the deviation amount was entirely within the range of ±0.5 mm. As a result, it can be seen that the prediction accuracy of the peripheral shape of the press formed part analysis model 21 at the forming bottom dead center is higher than that before the analysis condition is adjusted (refer to FIG. 3(c)).

In the analysis condition adjustment step S23, the analysis condition may be adjusted (changed) as described above to perform the elastoplastic mechanical analysis, the prediction accuracy of the peripheral shape of the press formed part analysis model 21 at the forming bottom dead center may be obtained, and the analysis condition may be further adjusted based on the obtained prediction accuracy.

### <<Press forming condition adjustment step>>

The press forming condition adjustment step S25 is a step of adjusting the press forming condition in the elastoplastic mechanical analysis in the process of press forming the actual press formed part 11. The press forming condition is adjusted so as to allow a deviation between the peripheral shape at the forming bottom dead center of the press formed part analysis model 21 obtained under the analysis condition adjusted in the analysis condition adjustment step S23 and a target of the peripheral shape of the actual press formed part 11 at the forming bottom dead center to fall within a predetermined range.

The adjustment of the press forming condition in the press forming condition adjustment step S25 is performed, for example, according to the following procedures (A) to (D).
(A) Elastoplastic mechanical analysis including the process of press forming the actual press formed part 11 and the subsequent springback process is performed under the analysis condition adjusted in the analysis condition adjustment step S23, and the peripheral shape of the press formed part analysis model 21 at the forming bottom dead center is obtained. In the mechanical analysis, the adjusted analysis condition is given to the press formed part analysis model 21, and the above-described press formed part analysis model peripheral shape acquisition step S3 may be performed.
(B) A deviation between the peripheral shape at the forming bottom dead center of the press formed part analysis model 21 obtained under the adjusted analysis condition and the target of the peripheral shape of the actual press formed part 11 at the forming bottom dead center is obtained, and it is determined whether the obtained deviation falls within a predetermined range.
(C) When it is determined that the deviation does not fall within the predetermined range, the press forming condition in the elastoplastic mechanical analysis in the process of press forming and the subsequent process of springback is adjusted using the press formed part analysis model 21.
(D) The above (A) to (C) are repeated until the deviation of the peripheral shape at the forming bottom dead center of the press formed part analysis model 21 obtained under the adjusted press forming condition falls within the predetermined range.

In the press forming condition adjustment step S25, the predetermined range determined in advance so that the deviation of the peripheral shape of the press formed part analysis model 21 at the forming bottom dead center falls within the predetermined range may be appropriately set based on, for example, dimensional accuracy allowed for the actual press formed part 11.

Further, in the adjustment of the press forming condition, for example, the setting position of the blank model and the shape of the blank model may be changed based on a deviation (not illustrated) between the peripheral shape of the press formed part analysis model 21 at the forming bottom dead center and the target.

For example, with respect to a portion at which the peripheral shape deviates from the target shape in the press formed part analysis model 21, the positions of the positioning holes, pins, and the like of the model of the tool of press forming 1 may be adjusted so that the setting position of the blank model with respect to the model of the tool of press forming 1 deviates in the direction opposite the deviation. Alternatively, the shape of the blank model before press forming may be adjusted so that the peripheral shape of the press formed part analysis model is changed in a direction opposite the deviation.

Additionally, in the press forming condition adjustment step S25, the press forming condition may be adjusted by changing the shape of the model of the tool of press forming 1.

### <<Press forming step>>

The press forming step S27 is a step of actually press forming the blank using the tool of press forming under the press forming condition adjusted in the press forming condition adjustment step S25 and manufacturing the actual press formed part 11.

As described above, in the method of manufacturing the press formed part according to the second embodiment, the analysis condition is adjusted so as to improve the prediction accuracy of the peripheral shape at the forming bottom dead center of the press formed part analysis model obtained by the method according to the first embodiment. Subsequently, the press forming condition is adjusted so that the deviation between the peripheral shape at the forming bottom dead center of the press formed part analysis model obtained under the adjusted analysis condition and the target of the peripheral shape at the forming bottom dead center of the actual press formed part falls within a predetermined range. By actually press forming the actual press formed part under the adjusted press forming condition, the actual press formed part having improved dimensional accuracy of the peripheral shape can be manufactured. As a result, it is possible to suppress trouble when parts assembly is performed with other parts.

By the method of manufacturing the press formed part according to the second embodiment, even when the actual press formed part is press-formed under the adjusted press forming condition so that the peripheral shape satisfies dimensional accuracy, the peripheral shape may not satisfy allowable dimensional accuracy. In such a case, further adjustment of the press forming condition such as the position of the blank and the die shape may be repeated based on the peripheral shape of the actual press formed part that is press-formed under the adjusted press forming condition.

However, in the method according to the second embodiment, since the press forming condition is adjusted so as to improve the dimensional accuracy of the peripheral shape, it is possible to satisfy the allowable dimensional accuracy for the peripheral shape of the actual press formed part without repeating the adjustment of the blank position, the die shape, and the like many times.

As described above, according to the method of manufacturing the press formed part according to the second embodiment, it is possible to significantly reduce the cost and period of preparation for production of the actual press formed part 11.

Furthermore, according to the method of manufacturing the press formed part of the second embodiment, it is possible to change the actual press forming condition in accordance with a sign of variation in the peripheral shape at the time of mass production of the actual press formed part 11, such as wear or deformation of the tool of press forming. This makes it possible to suppress occurrence of a large number of dimensional defects in the peripheral shape of the actual press formed part 11.

The actual press formed part 11 targeted in the first embodiment and the second embodiment is an automobile component (front pillar upper), but the actual press formed part targeted in the present invention may be a consumer electronics component or the like.

### Examples

An experiment for verifying the operation and effect of the present invention has been performed, and the experiment will be described below. In an Example, the press forming condition of the actual press formed part 11 illustrated in FIG. 2 was adjusted so that the peripheral shape at the forming bottom dead center coincided with the target shape. As in the first embodiment and the second embodiment described above, the actual press formed part 11 simulates a front pillar upper of an automobile, and is obtained by press forming a cold rolled steel sheet having a tensile strength of 980 MPa-class and a sheet thickness of 1.4 mm.

In the experiment, as an invention example, the peripheral shape prediction accuracy acquisition step S21, the analysis condition adjustment step S23, the press forming condition adjustment step S25, and the press forming step S27 of the second embodiment described above were performed, and the actual press formed part 11 was press-formed.

In the invention example, in the press forming condition adjustment step S25, the positions of the positioning hole, the locating pin, and the like of the blank in the model of the tool of press forming 1 are adjusted as the press forming conditions so that the peripheral shape of the press formed part analysis model 21 at the forming bottom dead center approaches a target shape. The target shape was set as a target (hereinafter, referred to as a "target shape") of the peripheral shape of the actual press formed part 11 at the forming bottom dead center. In addition, in the press forming step S27, a tool of press forming was actually manufactured at the setting position (positioning hole/pin) of the blank with respect to the model of the tool of press forming 1 whose shape was adjusted with respect to the press formed part analysis model 21, and the blank was press-formed into the actual press formed part 11 using the manufactured tool of press forming.

The surface profile of the press-formed actual press formed part 11 was measured after the actual press formed part 11 was released from the tool of press forming and was spring-backed, and the press formed part workpiece shape model 15 was generated from the measured three-dimensional surface profile measurement data. Then, elastic finite element analysis of the process of sandwiching the generated press formed part workpiece shape model 15 up to the forming bottom dead center by the model of the tool of press forming 1 was performed so as to obtain the peripheral shape of the press formed part workpiece bottom dead center shape model 17 at the forming bottom dead center.

Further, in the experiment, as a comparative example, the press forming condition adjustment step S25 and the press forming step S27 were performed without performing the peripheral shape prediction accuracy acquisition step S21 and the analysis condition adjustment step S23 according to the second embodiment, and the actual press formed part 11 was press-formed. In the comparative example, by using the press formed part analysis model 21 in which a deviation from the peripheral shape of the actual press formed part 11 was still generated, the press forming condition was adjusted so that the peripheral shape at the forming bottom dead center of the press formed part analysis model 21 approaches the target shape. Then, the actual press formed part 11 was press-formed under the adjusted press forming condition.

In the invention example and the comparative example, the press forming condition was adjusted by changing the positions of the positioning holes, pins, and the like of the blank in the model of the tool of press forming 1 based on the peripheral shape at the forming bottom dead center of the press formed part analysis model 21.

The peripheral shape at the forming bottom dead center of the actual press formed part 11 in each of the invention example and the comparative example was evaluated by a ratio (hereinafter, referred to as "concordance rate of ±0.5 mm") of a length of the peripheral shape in which a deviation amount from the target shape was within ±0.5 mm.

The concordance rate of ±0.5 mm in the invention example was 95%, whereas the concordance rate of ±0.5 mm in the comparative example was 65%. From this result, it was demonstrated that the dimensional accuracy of the peripheral shape at the forming bottom dead center of the actual press formed part 11 can be improved according to the method of the present invention.

Further, for each of the invention example and the comparative example, adjustment of the die shape was repeated so that the concordance rate of ±0.5 mm of the peripheral shape at the forming bottom dead center of the actual press formed part 11 became 100%. Adjustment of the die shape was performed in the same manner as adjustment of the press forming condition described above.

For the actual press formed part 11 according to the invention example, the concordance rate of ±0.5 mm became 100% by adjusting the die shape once. On the other hand, for the actual press formed part 11 according to the comparative example, the concordance rate of ±0.5 mm became 100% by adjusting the die shape three times. From this result, it was demonstrated that the method according to the present invention can achieve the dimensional accuracy allowed for the actual press formed part 11 with a smaller number of times of adjustment of the die shape. As a result, it was shown that the cost and period of preparation for production of the actual press formed part can be significantly reduced.

### Industrial Applicability

According to the present invention, it is possible to provide a method, a device, and a program of evaluating a peripheral shape of a press formed part, capable of accurately comparing a peripheral shape of an actual press formed part that is actually press-formed with a peripheral shape of a press formed part analysis model acquired by elastoplastic mechanical analysis in a process of press forming the actual press formed part with high reproducibility and capable of appropriately evaluating each of the peripheral shapes. Furthermore, according to the present invention, it is possible to provide a method of manufacturing a press formed part, in which the method is performed to manufacture an actual press formed part having improved dimensional accuracy obtained by improving prediction accuracy based on evaluation of a peripheral shape of a press formed part analysis model and then adjusting a press forming condition so as to improve dimensional accuracy of the peripheral shape.

### Reference Signs List

1 MODEL OF TOOL OF PRESS FORMING
3 LOWER DIE
5 UPPER DIE
11 ACTUAL PRESS FORMED PART
13 THREE-DIMENSIONAL SURFACE PROFILE MEASUREMENT DATA
15 PRESS FORMED PART WORKPIECE SHAPE MODEL
17 PRESS FORMED PART WORKPIECE BOTTOM DEAD CENTER SHAPE MODEL
17a PUNCH BOTTOM PORTION
17b FLANGE PORTION
21 PRESS FORMED PART ANALYSIS MODEL
21a PUNCH BOTTOM PORTION
21b FLANGE PORTION
31 DEVICE OF EVALUATING PERIPHERAL SHAPE
33 ACTUAL PRESS FORMED PART PERIPHERAL SHAPE ACQUISITION UNIT
35 PRESS FORMED PART ANALYSIS MODEL PERIPHERAL SHAPE ACQUISITION UNIT
37 PERIPHERAL SHAPE COMPARISON/EVALUATION UNIT
41 DEVICE OF EVALUATING PERIPHERAL SHAPE
43 ACTUAL PRESS FORMED PART CONTACT PRESSURE DISTRIBUTION CALCULATION UNIT
45 PRESS FORMED PART ANALYSIS MODEL CONTACT PRESSURE DISTRIBUTION CALCULATION UNIT
47 CONTACT PRESSURE DISTRIBUTION COMPARISON/EVALUATION UNIT

## Claims

1. A method of evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes, the method comprising:
an actual press formed part peripheral shape acquisition step of generating a press formed part workpiece shape model from three-dimensional surface profile measurement data acquired by measuring a surface profile of the actual press formed part after die release of the actual press formed part and springback thereof, performing mechanical analysis in a process of sandwiching the press formed part workpiece shape model up to a forming bottom dead center by a model of the tool of press forming of the tool of press forming, acquiring a press formed part workpiece bottom dead center shape model at the forming bottom dead center, and acquiring a peripheral shape of the obtained press formed part workpiece bottom dead center shape model as the peripheral shape of the actual press formed part;
a press formed part analysis model peripheral shape acquisition step of obtaining the press formed part analysis model at the forming bottom dead center by performing elastoplastic mechanical analysis in a process of press forming a blank model of the blank using the model of the tool of press forming over a single process or a plurality of processes, and acquiring the peripheral shape of the obtained press formed part analysis model; and
a peripheral shape comparison/evaluation step of comparing the peripheral shape of the actual press formed part acquired in the actual press formed part peripheral shape acquisition step with the peripheral shape of the press formed part analysis model acquired in the press formed part analysis model peripheral shape acquisition step and evaluating each of the peripheral shapes.

2. The method of evaluating a peripheral shape of a press formed part according to claim 1, wherein
the mechanical analysis in the actual press formed part peripheral shape acquisition step is an elastic finite element analysis or an elasto-plastic finite element analysis, and
the elastoplastic mechanical analysis in the press formed part analysis model peripheral shape acquisition step is the elasto-plastic finite element analysis.

3. The method of evaluating a peripheral shape of a press formed part according to claim 1 or 2, wherein, when the process of press forming the actual press formed part is divided for respective portions of the actual press formed part, the model of the tool of press forming in the actual press formed part peripheral shape acquisition step is formed as one model of the tool of press forming obtained by combining the models of the tools of press forming of respective tools of press forming adopted to press-form the respective portions of the actual press formed part.

4. The method of evaluating a peripheral shape of a press formed part according to claim 1 or 2, further comprising:
an actual press formed part contact pressure distribution calculation step of calculating, as a contact pressure distribution from the tool of press forming acting on the actual press formed part, a contact pressure distribution with the model of the tool of press forming acting on the press formed part workpiece bottom dead center shape model obtained in the actual press formed part peripheral shape acquisition step;
a press formed part analysis model contact pressure distribution calculation step of calculating a contact pressure distribution with the model of the tool of press forming acting on the press formed part analysis model at the forming bottom dead center, the press formed part analysis model being obtained in the press formed part analysis model peripheral shape acquisition step; and
a contact pressure distribution comparison/evaluation step of comparing the contact pressure distribution acting on the actual press formed part, the contact pressure distribution being calculated in the actual press formed part contact pressure distribution calculation step, with the contact pressure distribution acting on the press formed part analysis model, the contact pressure distribution being calculated in the press formed part analysis model contact pressure distribution calculation step, and evaluating each of the contact pressure distributions.

5. The method of evaluating a peripheral shape of a press formed part according to claim 3, further comprising:
an actual press formed part contact pressure distribution calculation step of calculating, as a contact pressure distribution from the tool of press forming acting on the actual press formed part, a contact pressure distribution with the model of the tool of press forming acting on the press formed part workpiece bottom dead center shape model obtained in the actual press formed part peripheral shape acquisition step;
a press formed part analysis model contact pressure distribution calculation step of calculating a contact pressure distribution with the model of the tool of press forming acting on the press formed part analysis model at the forming bottom dead center, the press formed part analysis model being obtained in the press formed part analysis model peripheral shape acquisition step; and
a contact pressure distribution comparison/evaluation step of comparing the contact pressure distribution acting on the actual press formed part, the contact pressure distribution being calculated in the actual press formed part contact pressure distribution calculation step, with the contact pressure distribution acting on the press formed part analysis model, the contact pressure distribution being calculated in the press formed part analysis model contact pressure distribution calculation step, and evaluating each of the contact pressure distributions.

6. A device for evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes, the device comprising:
an actual press formed part peripheral shape acquisition unit configured to generate a press formed part workpiece shape model from three-dimensional surface profile measurement data acquired by measuring a surface profile of the actual press formed part after die release of the actual press formed part and springback thereof, to perform mechanical analysis in a process of sandwiching the press formed part workpiece shape model up to a forming bottom dead center by a model of the tool of press forming of the tool of press forming, to acquire a press formed part workpiece bottom dead center shape model at the forming bottom dead center, and to acquire a peripheral shape of the obtained press formed part workpiece bottom dead center shape model as the peripheral shape of the actual press formed part;
a press formed part analysis model peripheral shape acquisition unit configured to acquire the press formed part analysis model at the forming bottom dead center by performing elastoplastic mechanical analysis in a process of press forming a blank model of the blank using the model of the tool of press forming over a single process or a plurality of processes, and to acquire the peripheral shape of the obtained press formed part analysis model; and
a peripheral shape comparison/evaluation unit configured to compare the peripheral shape of the actual press formed part acquired by the actual press formed part peripheral shape acquisition unit with the peripheral shape of the press formed part analysis model acquired by the press formed part analysis model peripheral shape acquisition unit and evaluate each of the peripheral shapes.

7. The device for evaluating a peripheral shape of a press formed part according to claim 6, further comprising:
an actual press formed part contact pressure distribution calculation unit configured to calculate, as a contact pressure distribution from the tool of press forming acting on the actual press formed part, a contact pressure distribution with the model of the tool of press forming acting on the press formed part workpiece bottom dead center shape model acquired in the actual press formed part peripheral shape acquisition unit;
a press formed part analysis model contact pressure distribution calculation unit configured to calculate a contact pressure distribution with the model of the tool of press forming acting on the press formed part analysis model at the forming bottom dead center, the press formed part analysis model being obtained in the press formed part analysis model peripheral shape acquisition unit; and
a contact pressure distribution comparison/evaluation unit configured to compare the contact pressure distribution acting on the actual press formed part, the contact pressure distribution being calculated by the actual press formed part contact pressure distribution calculation unit, with the contact pressure distribution acting on the press formed part analysis model, the contact pressure distribution being calculated by the press formed part analysis model contact pressure distribution calculation unit, and evaluate each of the contact pressure distributions.

8. A program for evaluating a peripheral shape of a press formed part by comparing a peripheral shape of an actual press formed part obtained by actually press forming a blank using a tool of press forming with a peripheral shape of a press formed part analysis model obtained by elastoplastic mechanical analysis in a process of press forming the actual press formed part and evaluating each of the peripheral shapes, the program causing a computer to function as:
an actual press formed part peripheral shape acquisition unit configured to generate a press formed part workpiece shape model from three-dimensional surface profile measurement data acquired by measuring a surface profile of the actual press formed part after die release of the actual press formed part and springback thereof, to perform mechanical analysis in a process of sandwiching the press formed part workpiece shape model up to a forming bottom dead center by a model of the tool of press forming of the tool of press forming, to acquire a press formed part workpiece bottom dead center shape model at the forming bottom dead center, and to acquire a peripheral shape of the obtained press formed part workpiece bottom dead center shape model as the peripheral shape of the actual press formed part;
a press formed part analysis model peripheral shape acquisition unit configured to obtain the press formed part analysis model at the forming bottom dead center by performing elastoplastic mechanical analysis in a process of press forming a blank model of the blank using the model of the tool of press forming over a single process or a plurality of processes, and to acquire the peripheral shape of the obtained press formed part analysis model; and
a peripheral shape comparison/evaluation unit configured to compare the peripheral shape of the actual press formed part acquired by the actual press formed part peripheral shape acquisition unit with the peripheral shape of the press formed part analysis model acquired by the press formed part analysis model peripheral shape acquisition unit and evaluate each of the peripheral shapes.

9. The program for evaluating a peripheral shape of a press formed part according to claim 8, further causing the computer to function as:
an actual press formed part contact pressure distribution calculation unit configured to calculate, as a contact pressure distribution from the tool of press forming acting on the actual press formed part, a contact pressure distribution with the model of the tool of press forming acting on the press formed part workpiece bottom dead center shape model obtained by the actual press formed part peripheral shape acquisition unit;
a press formed part analysis model contact pressure distribution calculation unit configured to calculate a contact pressure distribution with the model of the tool of press forming acting on the press formed part analysis model at the forming bottom dead center, the press formed part analysis model being obtained by the press formed part analysis model peripheral shape acquisition unit; and
a contact pressure distribution comparison/evaluation unit configured to compare the contact pressure distribution acting on the actual press formed part, the contact pressure distribution being calculated by the actual press formed part contact pressure distribution calculation unit, with the contact pressure distribution acting on the press formed part analysis model, the contact pressure distribution being calculated by the press formed part analysis model contact pressure distribution calculation unit, and evaluate each of the contact pressure distributions.

10. A method of manufacturing a press formed part, the method being performed to manufacture an actual press formed part by adjusting a press forming condition so as to improve dimensional accuracy of a peripheral shape and comprising:
a peripheral shape prediction accuracy acquisition step of obtaining, as prediction accuracy of a peripheral shape at a forming bottom dead center of a press formed part analysis model, a difference between the peripheral shape at the forming bottom dead center of the press formed part analysis model obtained by elastoplastic mechanical analysis in a process of press forming the actual press formed part and a peripheral shape at a forming bottom dead center of the actual press formed part obtained by actually press forming a blank using a tool of press forming based on the method of evaluating the peripheral shape of the press formed part, according to claim 1;
an analysis condition adjustment step of adjusting, based on the prediction accuracy of the peripheral shape of the press formed part analysis model, an analysis condition of the press formed part analysis model in the elastoplastic mechanical analysis in the process of press forming the actual press formed part;
a press forming condition adjustment step of adjusting a press forming condition in the elastoplastic mechanical analysis in the process of press forming the actual press formed part so as to allow a deviation between the peripheral shape at the forming bottom dead center of the press formed part analysis model obtained under the adjusted analysis condition and a target of the peripheral shape at the forming bottom dead center of the actual press formed part to fall within a predetermined range; and
a press forming step of actually press forming the blank using the tool of press forming under the press forming condition adjusted in the press forming condition adjustment step and manufacturing the actual press formed part.
